(19) Europäisches Patentamt
European Patent Office
Office européen des brevets

(11) **EP 1 539 337 B2**

(12) **NOUVEAU FASCICULE DE BREVET EUROPEEN**
Après la procédure d'opposition

(45) Date de publication et mention de la décision concernant l'opposition:
**09.03.2011 Bulletin 2011/10**

(45) Mention de la délivrance du brevet:
**16.04.2008 Bulletin 2008/16**

(21) Numéro de dépôt: **03750812.4**

(22) Date de dépôt: **16.07.2003**

(51) Int Cl.:
**B01F 3/20** *(2006.01)*    **B01F 3/12** *(2006.01)*
**C09C 1/02** *(2006.01)*    **C01F 11/18** *(2006.01)*

(86) Numéro de dépôt international:
**PCT/FR2003/002254**

(87) Numéro de publication internationale:
**WO 2004/012849 (12.02.2004 Gazette 2004/07)**

(54) **PROCEDE DE PREPARATION DE SUSPENSIONS AQUEUSES DE CHARGES MINERALES**

VERFAHREN ZUM HERSTELLEN VON WASSERIGEN SUSPENSIONEN VON MINERALZUSCHLÄGEN

METHOD FOR PRODUCING AQUEOUS SUSPENSIONS OF MINERAL FILLERS

(84) Etats contractants désignés:
**AT BE BG CH CY CZ DE DK EE ES FI FR GB GR HU IE IT LI LU MC NL PT RO SE SI SK TR**

(30) Priorité: **17.07.2002 FR 0209015**

(43) Date de publication de la demande:
**15.06.2005 Bulletin 2005/24**

(73) Titulaire: **Omya Development AG**
**4665 Oftringen (CH)**

(72) Inventeurs:
• **HUSSON, Maurice**
**F-51000 Chalons en Champagne (FR)**
• **JACQUEMET, Christian**
**F-69005 Lyon (FR)**
• **VOROBIEV, Eugène**
**F-60200 Compiègne (FR)**

(74) Mandataire: **Richebourg, Michel François et al**
**Cabinet Michel Richebourg**
**"Le Clos du Golf"**
**69 Rue Saint-Simon**
**42000 Saint Etienne (FR)**

(56) Documents cités:
**EP-A- 0 850 685    EP-A- 1 160 201**
**WO-A-97/38940    WO-A-98/25854**
**WO-A1-95/11736    WO-A1-95/25146**
**WO-A2-00/39029    JP-A- 2002 194 263**
**US-A- 4 166 582    US-A- 4 383 936**
**US-A- 4 793 985    US-A- 4 962 279**
**US-A- 5 833 747**

EP 1 539 337 B2

**Description**

La présente invention concerne le secteur technique des charges minérales, tels que notamment le domaine papetier et en particulier le couchage du papier et la chargé de masse du papier, ou encore les domaines de la peinture, du traitement des eaux comme notamment le domaine des boues d'épuration, de la détergence, de la céramique, des ciments ou des liants hydrauliques, des travaux publics, des encres et des vernis, de l'encollage des textiles ou encore tout type d'industrie nécessitant la mise en oeuvre de suspensions pigmentaires concentrées, et concerne plus particulièrement les domaines du papier, du traitement des eaux, de la peinture et de la céramique.

De manière plus particulière, l'invention concerne un procédé de préparation de suspensions aqueuses de charges ou pigments minéraux ayant une bonne rhéologie mises en oeuvre dans les divers domaines précités.

Pour réaliser les applications industrielles dans les domaines ci-dessus, il est nécessaire de produire des suspensions de charges minérales, notamment des carbonates de calcium, présentant une excellente rhéologie c'est-à-dire disposant d'une viscosité faible pendant la durée de stockage pour en faciliter la manipulation et l'application, de même qu'une teneur en matière minérale la plus élevée possible, afin de diminuer la quantité d'eau manipulée.

Lors de la fabrication de ces suspensions aqueuses de charges minérales répondant aux critères précités, certains procédés aboutissent à des suspensions aqueuses faiblement concentrées en matières minérales ou organiques.

Il faut alors concentrer ces suspensions pour les proposer à l'utilisateur final qui utilise lesdites suspensions aqueuses ou pour éliminer les solvants présents lorsque ces charges sont mises en oeuvre sous forme de poudre.

Un des moyens connus à ce jour est la concentration de ces suspensions par un procédé de filtration, mais ces filtrations aboutissaient jusqu'à ce jour à des gâteaux tellement compacts qu'il est nécessaire d'une part d'ajouter du dispersant après l'étape de filtration et d'autre part de mettre en oeuvre une forte énergie mécanique pour les remettre en suspension ou véhiculer les suspensions concentrées.

Ainsi, la demande de brevet WO 00/39029 enseigne à l'homme du métier qu'un procédé pour préparer une suspension aqueuse de carbonate de calcium consiste à poursuivre l'étape de filtration par une étape de concentration thermique puis par une étape de mise en oeuvre d'énergie mécanique pour remettre en suspension les particules minérales, ceci avec l'ajout de dispersant après l'étape de filtration.

Confrontée à ce problème d'utilisation supplémentaire d'agent dispersant ou de mise en oeuvre d'une forte énergie mécanique, la Demanderesse a alors trouvé, de manière surprenante que, selon l'invention le procédé de préparation de suspensions aqueuses de matières minérales caractérisé par une filtration en deux étapes distinctes permet de résoudre le problème et donc de pouvoir obtenir une suspension aqueuse de matières minérales directement utilisable après l'étape de filtration, éventuellement suivie d'une compression, sans l'obligation de mettre en oeuvre une étape supplémentaire telle que l'ajout d'agent dispersant après l'étape de concentration ou bien l'utilisation d'énergie mécanique pour la remise en suspension des matières minérales.

Ainsi, il est connu (Solid-liquid filtration and separation technology, A. Rushton, A.S. Ward, R.G. Holdich, 1996 ; Filtration : Equipment selection Modelling and process simulation, R.J. Wakeman, E.S. Tarleton, 1999 ; Pratique de la filtration, J.P. Duroudier, 1999) de filtrer des suspensions ne contenant pas de dispersant mais l'inconvénient est d'aboutir à des gâteaux difficilement redispersables.

Il est également connu (JP 53-025646) d'introduire, dans une suspension aqueuse de carbonate de calcium, la moitié de la quantité du dispersant avant de filtrer ladite suspension et de rajouter l'autre moitié après l'étape de filtration pour obtenir une suspension hautement concentrée en carbonate de calcium.

L'homme du métier connaît également un autre document (GB 1 482 258) qui révèle un procéda de préparation de suspensions aqueuses de carbonate de calcium précipité (PCC) mettant en oeuvre un dispersant avant l'étape de concentration par une filtration en une seule étape, mais ce procédé présente deux inconvénients majeurs.

Le premier consiste en la nécessité de l'utilisation d'une pression supérieure à 17 bars pour pouvoir filtrer ainsi qu'en l'obligation de mettre en oeuvre des appareillages dispersifs bien particuliers pour disperser le gâteau obtenu.

Le deuxième inconvénient de ladite méthode réside dans le fait que de grandes quantités de dispersant se retrouvent dans le filtrat générant alors des problèmes d'environnement, d'écologie, de traitement des rejets ou encore de recirculation des eaux utilisées dans le reste du procédé ainsi que générant des problèmes de coût au vu des grandes quantités de dispersant mis en oeuvre.

De même le brevet GB 1 463 974, décrit une méthode de filtration à une seule étape aboutissant aux mêmes inconvénients que ceux précités.

Ainsi les techniques connus de l'homme du métier le conduisent à utiliser l'agent disposant soit totalement après la filtration soit la moitié avant l'étape de filtration et l'autre moitié après l'étape de filtration ou alors à utiliser l'agent dispersant avant l'étape de filtration mais avec la nécessité de mettre en oeuvre d'une part une quantité importante d'agent dispersant générant les inconvénients précités et d'autre part un appareillage dispersif bien particulier.

On connaît encore le document WO 97 / 38940 qui décrit un procédé de fabrication de.. carbonate de calcium synthétique appelé PCC comprenant une filtration du PCC, filtration d'une part nécessitant l'ajout d'un dispersant (page 8, lignes 3 à 4 et page 8 lignes 20 à 24) et d'autre part n'employant pas deux étapes distinctes de filtration <u>opérées en continu l'une par rapport à l'autre</u>, éventuellement suivies d'une compression, mais employant un dispersant.

On connaît enfin le document US 4,166,582 qui décrit un procédé de broyage comprenant les étapes a) à e) ; l'étape e) correspond à une concentration par filtration (colonne 4 lignes 24-26), et cette filtration ne comporte pas deux étapes distinctes ; ce document indique de plus la nécessité d'ajouter une certaine quantité de dispersant (colonne 4, lignes 28-30) pour pouvoir obtenir une suspension utilisable.

De manière générale, toutes ces techniques connues jusqu'à ce jour ont l'inconvénient d'aboutir à une grande difficulté de remise en suspension du gâteau si l'on veut obtenir des suspensions fortement concentrées en matière sèche et disposant d'une bonne rhéologie.

Ainsi un des buts de l'invention est de proposer un procédé de préparation de suspensions aqueuses de chargea et/ou pigments minéraux ayant une bonne rhéologie, c'est-à-dire de proposer un procédé de préparation de suspensions aqueuses de matières minérales fluides, pompables et transportables par l'utilisateur final immédiatement après l'étape de filtration, éventuellement suivie d'une compression, et ceci pour de faibles quantités de dispersant mis en oeuvre et permettant le contrôle des quantités de dispersant présent dans le filtrat en vue d'obtenir des quantités quasi-nulles de dispersant présent dans le filtrat.

Par quantités quasi-nulles de dispersant présent dans le filtrat on entend que la fin de la deuxième étape correspond à l'apparition de dispersant dans le filtrat. Cette apparition de dispersant dans le filtrat est quantifiée par une mesure de conductivité électrique.

Ce procédé de préparation, selon l'invention, de suspensions aqueuses de matières minérales fluides, pompables et transportables par l'utilisateur final immédiatement après l'étape de filtration, avec de faibles quantités de dispersant mis en oeuvre et permettant le contrôle des quantités de dispersant présent dans le filtrat se caractérise en ce qu'il comporte une filtration en deux étapes distinctes opérées en continu l'une par rapport à l'autre, ladite première étape, où il se forme une pré-couche, ne mettant en oeuvre aucun agent dispersant, et ladite seconde étape de filtration mettant en oeuvre un ou plusieurs dispersant(s), au cours de laquelle l'eau de la pré-couche est remplacée par l'eau de la deuxième étape de filtration contenant un ou plusieurs agents dispersants et en ce que la quantité d'agent(s) dispersant(s) présent dans le filtrat est contrôlée et limitée par une mesure en continu de la conductivité électrique du filtrat et en ce que l'étape de filtration est stoppée dès l'instant où la conductivité du filtrat augmente, éventuellement suivie d'une compression.

Ces deux étapes distinctes de filtration sont composées d'une première étape où il se forme une pré-couche ne mettant en oeuvre aucun agent dispersant suivie d'une deuxième étape continue à la première en présence d'un ou plusieurs agents dispersants, et de manière particulière suivie d'une deuxième étape de filtration contenant 0,01 % à 10 %, préférentiellement de 0,1 % à 2 % en poids sec de dispersant par rapport au poids sec de matière minérale à filtrer.

Cette pré-couche formée, l'eau de la pré-couche est remplacée, lors de la deuxième étape, par l'eau de la deuxième étape contenant un ou plusieurs agents dispersants de manière à ce que le ou les dispersants soient répartis de manière homogène dans tout le gâteau de filtration.

Il est à noter que pendant toute la durée de la filtration, la pression mise en oeuvre a une valeur de l'ordre de celle couramment utilisée dans les procédés de filtration classique. De manière encore plus particulière, ce procédé selon l'invention, se caractérise en ce que la quantité d'agent dispersant présent dans le filtrat est contrôlée et limitée par une mesure en continu de la conductivité électrique du filtrat et en ce que l'étape de filtration est stoppée dès l'instant où la conductivité électrique du filtrat augmente. Cet arrêt de la filtration au moment où la conductivité électrique augmente correspond à une quantité quasi-nulle de dispersant présent dans le filtrat.

Ainsi, le procédé selon l'invention permet d'obtenir directement des suspensions aqueuses de matières minérales fluides, pompables et transportables immédiatement après l'étape de filtration, éventuellement suivie d'une compression, avec de faibles quantités de dispersant mis en oeuvre et des quantités quasi-nulles de dispersant présent dans le filtrat.

Pour ce faire, le ou les agents dispersants mis en oeuvre sont choisis soit parmi les dispersants couramment utilisés dans le domaine de la mise en suspension des charges minérales tels que par exemple les polyphosphates, les polyacrylates fonctionnalisés ou non, ou tout autre polymère à fonction dispersante, soit parmi les tensio-actifs anioniques, cationiques, non ioniques ou encore zwitterioniques.

Le procédé de préparation de suspensions aqueuses de matières minérales selon l'invention se caractérise, en ce que la matière minérale peut être choisie parmi le carbonate de calcium naturel dont notamment les différentes craies, calcites, marbres ou encore choisie parmi les carbonates de calcium synthétiques tels que les carbonates de calcium précipités à différents stades de cristallisation ou bien encore parmi les carbonates mixtes de magnésium et de calcium tels que les dolomies ou encore parmi le carbonate de magnésium, le carbonate de zinc, la chaux, la magnésie, le sulfate de baryum tel que la baryte, le sulfate de calcium, la silice, les silico-magnésiens tels que le talc, la wollastonite, les argiles et autres silico-alumineux tels que les kaolins, le mica, les oxydes ou hydroxydes de métaux ou d'alcalino-terreux tels que l'hydroxyde de magnésium, les oxydes de fer, l'oxyde de zinc, l'oxyde de titane, les dioxydes de titane sous ses formes anatase ou rutile, et leurs mélanges comme notamment les mélanges de talc et de carbonate de calcium.

De manière préférentielle, la matière minérale est choisie parmi le carbonate de calcium naturel, le carbonate de calcium synthétique encore appelé carbonate de calcium précipité, le dioxyde de titane sous ses formes anatase ou rutile, le kaolin, l'hydroxyde d'aluminium, les argiles ou leurs mélanges.

La suspension aqueuse de matière minérale obtenue est fluide, pompable et transportable par l'utilisateur final immédiatement après l'étape de filtration, éventuellement suivie d'une compression.

Cette suspension aqueuse de matière minérale obtenue contient 0,01 % à 10 %, préférentiellement 0,1 % à 2 % en poids sec de dispersant par rapport au poids sec de matière minérale à filtrer, et est obtenue par le procédé selon l'invention.

De manière plus particulière, la matière minérale peut être choisie parmi le carbonate de calcium naturel dont notamment les différentes craies, calcites, marbres ou encore choisie parmi les carbonates de calcium synthétiques tels que les carbonates de calcium précipités à différents stades de cristallisation ou bien encore parmi les carbonates mixtes de magnésium et de calcium tels que les dolomies ou encore parmi le carbonate de magnésium, le carbonate de zinc, la chaux, la magnésie, le sulfate de baryum tel que la baryte, le sulfate de calcium, la silice, les silico-magnésiens tels que le talc, la wollastonite, les argiles et autres silico-alumineux tels que les kaolins, le mica, les oxydes ou hydroxydes de métaux ou d'alcalino-terreux tels que l'hydroxyde de magnésium, les oxydes de fer, l'oxyde de zinc, l'oxyde de titane, les dioxydes de titane sous ses formes anatase ou rutile, et leurs mélanges comme notamment les mélanges de talc et de carbonate de calcium.

Les suspensions aqueuses préparées selon l'invention sont utilisables dans les domaines du papier, de la peinture, du traitement des eaux comme notamment le domaine des boues d'épuration, de la détergence, de la céramique, des ciments ou des liants hydrauliques, des travaux publics, des encres et des vernis, de l'encollage des textiles ou encore tout type d'industrie nécessitant la mise en oeuvre de suspensions pigmentaires concentrées, et plus particulièrement, dans les domaines du papier, du traitement des eaux, de la peinture et de la céramique.

La portée et l'intérêt de l'invention seront mieux perçus grâce aux exemples suivants qui ne sauraient être limitatifs.

EXEMPLE 1

Cet exemple illustre l'invention et concerne la filtration d'une suspension aqueuse de carbonate de calcium naturel et plus particulièrement d'une craie de Champagne de diamètre médian égal à 2 micromètres.

Pour ce faire, on met en oeuvre 286,8 grammes de la suspension de craie ayant une concentration en matière sèche égale à 20,3 % et comme appareil de filtration, un équipement de laboratoire de la société CHOQUENET constitué :

- d'un cadre en polypropylène comportant une chambre de 2,2 cm de largeur et 25 cm$^2$ de section,

- de deux plateaux en acier dont l'un fixe, présentant des cannelures sur la face interne, par lesquelles le filtrat est recueilli,

- de deux joints qui assurent l'étanchéité entre les plateaux et le cadre,

- de deux membranes filtrantes en polypropylène de la société SEFAR FYLTIS (réf. : F 0149 AN)

La chambre de filtration (CF) peut être alimentée successivement par un réservoir R1 contenant la suspension du pigment à concentrer puis par un second réservoir R2 contenant la même suspension que précédemment à laquelle sera ajoutée une quantité de dispersant Co nécessaire à l'obtention d'un gâteau concentré (ES$_2$) et facilement débatissable, c'est-à-dire un gâteau ayant une consistance suffisante pour être sorti de la chambre de filtration en un seul élément. Une autre alternative consiste en ce que R2 ne contient qu'une solution de dispersant.

Le procédé de filtration proprement dit se déroule en deux étapes distinctes (voir schéma 1) :

1/ lors d'une première étape, une pré-couche à partir de la suspension 1 est formée sur les membranes filtrantes,

2/ suivie d'une deuxième étape où la filtration est effectuée à partir de la suspension 2 contenant le dispersant.

Lors de la deuxième étape, l'eau contenue dans la pré-couche est remplacée par l'eau chargée en dispersant contenue dans la suspension 2 si bien qu'à la fin de l'étape de filtration, le dispersant est réparti de façon homogène dans tout le gâteau de filtration.

Chacune des étapes de filtration est réalisée sous une pression de 5 bars.

L'étape de filtration est suivie par une étape de compression sous une pression de 15 bars et permet d'obtenir un gâteau de filtration de siccité $ES_2$.

Le gâteau de filtration est alors soumis à un faible cisaillement afin d'obtenir une suspension encore appelé « slurry » fluide.

Cette étape est réalisée à l'aide d'un agitateur mécanique standard de laboratoire de type RAYNERI muni d'une pâle adaptée.

Lorsque la suspension est homogène, nous procédons à la mesure de sa viscosité (visco 2) à l'aide d'un viscosimètre Brookfield™ type RVT muni d'un module adapté.

La suspension selon l'invention, obtenue par le procédé selon l'invention décrit ci-dessus et mettant en oeuvre 0,2 % en poids sec, par rapport au poids sec de craie sèche, d'un polyacrylate d'ammonium de poids moléculaire en poids égal à 4 500 g/mole, est alors une suspension aqueuse de craie ayant une concentration en matière sèche égale à 76,8 % et une viscosité Brookfield™ égale à 2 900 mPa.s mesurée à 10 tours/minute et égale à 518 mPa.s mesurée à 100 tours/minute.

L'étape de filtration est stoppée lorsque la conductivité électrique du filtrat mesurée à l'aide d'un conductimètre HI 8820N de Hanna Instruments (Portugal) augmente, c'est-à-dire après avoir recueilli 170,6 grammes de filtrat. La teneur en dispersant dans le filtrat est alors quasi-nulle.

La suspension ainsi obtenue est fluide, pompable et transportable par l'utilisateur final immédiatement après l'étape de filtration.

Après un stockage de 8 jours de la suspension selon l'invention, une nouvelle mesure de viscosité Brookfield™ est effectuée après agitation du flacon contenant ladite suspension. On obtient alors une viscosité Brookfield™ égale à 3 770 mPa.s mesurée à 10 tours/minute et égale à 645 mPa.s mesurée à 100 tours/minute montrant que la suspension obtenue est fluide, pompable et transportable, même après huit jours de stockage.

### EXEMPLE 2

Cet exemple illustre l'invention et concerne la filtration d'une suspension aqueuse de carbonate de calcium naturel et plus particulièrement d'un marbre de diamètre médian égal à 0,75 micromètre.

Pour ce faire, avec le même mode opératoire et le même matériel que dans l'exemple 1, on met en oeuvre d'une part 173,2 grammes de la suspension aqueuse de marbre dont la concentration en matière sèche est égale à 27,6 % et d'autre part 0,5 % en poids sec, par rapport au poids sec de marbre, d'un polyacrylate de sodium dénommé Coatex DV 834, pour obtenir directement une suspension aqueuse de marbre dont la concentration en matière sèche est égale à 72,1 %, et dont la viscosité Brookfield™ est égale à 635 mPa.s mesurée à 10 tours/minute et égale à 240 mPa.s mesurée à 100 tours/minute.

L'étape de filtration est stoppée lorsque la conductivité électrique du filtrat mesurée à l'aide d'un conductimètre HI 8820N de Hanna Instruments (Portugal) augmente, c'est-à-dire après avoir recueilli 114,5 grammes de filtrat. La teneur en dispersant dans le filtrat est alors quasi-nulle.

La suspension ainsi obtenue est fluide, pompable et transportable par l'utilisateur final immédiatement après l'étape de filtration.

Après un stockage de 8 jours de la suspension selon l'invention, une nouvelle mesure de viscosité Brookfield™ est effectuée après agitation du flacon contenant ladite suspension. On obtient alors une viscosité Brookfield™ égale à 1 930 mPa.s mesurée à 10 tours/minute et égale à 550 mPa.s mesurée à 100 tours/minute montrant que la suspension obtenue est fluide, pompable et transportable, même après huit jours de stockage.

### EXEMPLE 3

Cet exemple illustre l'invention et concerne la filtration d'une suspension aqueuse de carbonate de calcium précipité (PCC) de diamètre médian égal à 0,9 micromètre.

Pour ce faire, avec le même mode opératoire et le même matériel que dans l'exemple 1, on met en oeuvre d'une part 156 grammes de la suspension aqueuse de PCC dont la concentration en matière sèche est égale à 24 % et d'autre part 1,0 % en poids sec, par rapport au poids sec de PCC, d'un polyacrylate de sodium de poids moléculaire en poids égal à 10 000 g/mole, pour obtenir directement une suspension aqueuse de PCC dont la concentration en matière sèche est égale à 65,9 %, et dont la viscosité Brookfield™ est égale à 4570 mPa.s mesurée à 10 tours/minute et égale à 930 mPa.s mesurée à 100 tours/minute.

L'étape de filtration est stoppée lorsque la conductivité électrique du filtrat mesurée à l'aide d'un conductimètre HI 8820N de Hanna Instruments (Portugal) augmente, c'est-à-dire après avoir recueilli 123,7 grammes de filtrat. La teneur en dispersant dans le filtrat est alors quasi-nulle.

La suspension ainsi obtenue est fluide, pompable et transportable par l'utilisateur final immédiatement après l'étape de filtration.

EXEMPLE 4

Cet exemple illustre l'invention et concerne la filtration d'une suspension aqueuse de carbonate de calcium naturel et plus particulièrement d'un marbre de diamètre médian égal à 0,6 micromètre.

Pour ce faire, avec le même mode opératoire et le même matériel que dans l'exemple 1, on met en oeuvre d'une part 226,4 grammes de la suspension aqueuse de marbre dont la concentration en matière sèche est égale à 20,9 % et d'autre part 1,0 % en poids sec, par rapport au poids sec de marbre, d'un polyacrylate de sodium dénommé Coatex DV 834, pour obtenir directement une suspension aqueuse de marbre dont la concentration en matière sèche est égale à 70,0 %, et dont la viscosité Brookfield™ est égale à 1 500 mPa.s mesurée à 10 tours/minute et égale à 670 mPa.s mesurée à 100 tours/minute.

L'étape de filtration est stoppée lorsque la conductivité électrique du filtrat mesurée à l'aide d'un conductimètre HI 8820N de Hanna Instruments (Portugal) augmente, c'est-à-dire après avoir recueilli 177,7 grammes de filtrat. La teneur en dispersant dans le filtrat est alors quasi-nulle.

La suspension ainsi obtenue est fluide, pompable et transportable par l'utilisateur final immédiatement après l'étape de filtration.

Après un stockage de 8 jours de la suspension selon l'invention, une nouvelle mesure de viscosité Brookfield™ est effectuée après agitation du flacon contenant ladite suspension. On obtient alors une viscosité Brookfield™ égale à 1 840 mPa.s mesurée à 10 tours/minute et égale à 750 mPa.s mesurée à 100 tours/minute montrant que la suspension obtenue est fluide, pompable et transportable, même après huit jours de stockage.

EXEMPLE 5

Cet exemple illustre l'invention et concerne la filtration d'une suspension aqueuse de dioxyde de titane commercialisé par la société Elementis sous le nom de RHD2.

Pour ce faire, avec le même mode opératoire et le même matériel que dans l'exemple 1, on met en oeuvre d'une part 390,9 grammes de la suspension aqueuse de dioxyde de titane dont la concentration en matière sèche est égale à 24,2 % et d'autre part 0,3 % en poids sec, par rapport au poids sec de dioxyde de titane, d'un copolymère commercialisé par la société Coatex sous le nom Coatex BR3, pour obtenir directement une suspension aqueuse de dioxyde de titane dont la concentration en matière sèche est égale à 74,2 %, et dont la viscosité Brookfield™ est égale à 1 100 mPa.s mesurée à 10 tours/minute et égale à 460 mPa.s mesurée à 100 tours/minute.

L'étape de filtration est stoppée lorsque la conductivité électrique du filtrat mesurée à l'aide d'un conductimètre HI 8820N de Hanna Instruments (Portugal) augmente, c'est-à-dire après avoir recueilli 288,5 grammes de filtrat. La teneur en dispersant dans le filtrat est alors quasi-nulle.

La suspension ainsi obtenue est fluide, pompable, transportable par l'utilisateur final immédiatement après l'étape de filtration.

Elle est également avantageusement utilisée dans le domaine de la peinture.

EXEMPLE 6

Cet exemple illustre l'invention et concerne la filtration d'une suspension aqueuse de kaolin commercialisé par la société Imerys sous le nom de SPS.

Pour ce faire, avec le même mode opératoire et le même matériel que dans l'exemple 1, on met en oeuvre d'une part 229,1 grammes de la suspension aqueuse de kaolin dont la concentration en matière sèche est égale à 23,9 % et d'autre part 0,2 % en poids sec, par rapport au poids sec de kaolin, d'un polyacrylate de sodium de poids moléculaire en poids égal à 4 500 g/mole, pour obtenir directement une suspension aqueuse de kaolin dont la concentration en matière sèche est égale à 68,0 %, et dont la viscosité Brookfield™ est égale à 1 590 mPa.s mesurée à 10 tours/minute et égale à 655 mPa.s mesurée à 100 tours/minute.

L'étape de filtration est stoppée lorsque la conductivité électrique du filtrat mesurée à l'aide d'un conductimètre HI 8820N de Hanna Instruments (Portugal) augmente, c'est-à-dire après avoir recueilli 167,7 grammes de filtrat. La teneur en dispersant dans le filtrat est alors quasi-nulle.

La suspension ainsi obtenue est fluide, pompable et transportable par l'utilisateur final immédiatement après l'étape de filtration.

EXEMPLE 7

Cet exemple illustre l'invention et concerne la filtration d'une suspension aqueuse d'hydroxyde d'aluminium commercialisé par la société Martinswerk sous le nom de OL 104.

Pour ce faire, avec le même mode opératoire et le même matériel que dans l'exemple 1, on met en oeuvre d'une part 201,0 grammes de la suspension aqueuse d' hydroxyde d'aluminium dont la concentration en matière sèche est égale à 25,3 % et d'autre part 0,25 % en poids sec, par rapport au poids sec d'hydroxyde d'aluminium, d'un copolymère de poids moléculaire en poids égal à 3 500 g/mole et composé d'acide acrylique et de méthacrylate de méthoxy-polyéthylène glycol de poids moléculaire 2 000 totalement neutralisé à la soude, pour obtenir directement une suspension aqueuse d'hydroxyde d'aluminium dont la concentration en matière sèche est égale à 71,8 %, et dont la viscosité Brookfield™ est égale à 230 mPa.s mesurée à 10 tours/minute et égale à 230 mPa.s mesurée à 100 tours/minute.

L'étape de filtration est stoppée lorsque la conductivité électrique du filtrat mesurée à l'aide d'un conductimètre HI 8820N de Hanna Instruments (Portugal) augmente, c'est-à-dire après avoir recueilli 144,2 grammes de filtrat. La teneur en dispersant dans le filtrat est alors quasi-nulle.

La suspension ainsi obtenue est fluide, pompable et transportable par l'utilisateur final immédiatement après l'étape de filtration.

EXEMPLE 8

Cet exemple concerne l'utilisation d'une suspension aqueuse de charge minérale selon l'invention dans le domaine papetier, et plus particulièrement concerne la mesure des propriétés optiques de la suspension de l'exemple 4 obtenue selon l'invention et plus particulièrement la détermination de la valeur de la capacité de diffusion de la lumière visible de la suspension aqueuse de l'exemple 4 ainsi que des valeurs de brillance intrinsèque du pigment obtenu par filtration.

Cette capacité de diffusion de la lumière visible est exprimée par un coefficient de diffusion de la lumière S qui est le coefficient de Kubelka-Munk de diffusion de la lumière, déterminé par la méthode bien connue de l'homme du métier décrite dans les publications de Kubelka et Munk (Zeitschrift für Technische Physik 12,539, (1931)), de Kubelka (J. Optical Soc. Am. 38(5),448, (1948) et J. Optical Soc. Am. 44(4),330,(1954)).

Pour ce faire, on dispose alors d'une feuille de papier synthétique vendu par la société Arjo Wiggins Teape sous le nom Synteape.

Avant d'être couchée à l'aide d'une coucheuse de type Hand Coater modèle KC202, cette feuille de papier de dimension 26 cm x 18 cm et d'un poids spécifique de 60 à 65 g/m$^2$ est pesée puis soumise à un rayonnement lumineux de longueur d'onde égale à 457 nm sur une plaque noire au moyen d'un spectrophotomètre Elrepho™ 3000 de Datacolor (Suisse) pour déterminer le facteur de réflectance $R_b$ du papier non couché sur fond noir.

La suspension à tester, formulée avec un liant (12 parts de liant styrène-acrylique (Acronal™ S360D) pour 100 g sec de charge minérale à tester) est alors appliquée sur cette feuille de papier pré-pesée à l'aide d'une coucheuse de type Hand Coater modèle KC202.

La feuille de papier ainsi couchée à différents poids de couche compris entre 5 et 50 g/m$^2$ est alors soumise à un rayonnement lumineux de longueur d'onde égale à 457 nm au moyen d'un spectrophotomètre Elrepho™ 3000 de Datacolor (Suisse) sur plaque noire pour déterminer le facteur de réflectance du papier sur fond noir $R_0$ et sur une pile d'au moins 10 feuilles de papier non couchée pour déterminer le facteur de réflectance des papiers couchés sur fond blanc $R_1$, r étant le facteur de réflectance de la pile de feuilles de papier non couché.

On détermine alors le facteur de réflectance $R_{sc}$ de la couche seule, sur fond noir, par la formule :

$$R_{sc} = \frac{R_1.R_b - R_0.r}{(R_1 - R_0).r\, R_b + R_b - r} \quad (1)$$

ainsi que la transmission $T_{sc}$ de la couche

$$T_{sc}^2 = \frac{(R_0 - R_{sc})(1 - R_{sc}\, R_b)}{R_b} \quad (2)$$

De ces deux quantités, il est possible de calculer une valeur théorique de réflectance $R_\infty$ pour une couche

d'épaisseur infinie donnée par la formule :

$$\frac{1-T_{sc}^2+R_{sc}^2}{R_c} = \frac{1+R_\infty^2}{R_\infty} \qquad (3)$$

Ainsi, de cette formule le coefficient de diffusion de la lumière S du pigment étudié peut être calculé pour chaque poids de couche sachant que, pour un poids de couche P,

$$S.P. = \frac{1}{b} \coth^{-1} \frac{(1-a\,R_{sc})}{b\,R_{sc}}$$

où

$$a = 0,5\left(\frac{1}{R_\infty} + R_\infty\right)$$

et

$$b = 0,5\left(\frac{1}{R_\infty} - R_\infty\right)$$

Ce coefficient de diffusion de la lumière S est tracé en fonction du poids de couche et la valeur S pour un poids de couche égal à 20 g/m$^2$ est déterminée par interpolation.
Dans le cas présent la valeur S obtenue est égale à 157 m$^2$/g et est tout à fait comparable aux valeurs obtenues pour des suspensions de carbonate de calcium de l'art antérieur obtenues selon les moyens classiques de concentration thermique.
De plus, on détermine la brillance 75°C TAPPI de la feuille de papier précédemment couchée avant calandrage par passage du papier couché dans le brillancemètre de laboratoire Lehmann™. On obtient alors pour le papier couché à l'aide de la sauce de couchage contenant la suspension aqueuse de carbonate de calcium de l'exemple 4 une brillance 75°C TAPPI égale à 63,5.
Le papier couché est également calandré à l'aide d'une supercalandreuse à 9 zones de contact entre les deux rouleaux, commercialisée par Kleinewefers.
La brillance 75°C TAPPI est alors égale à 69,3.

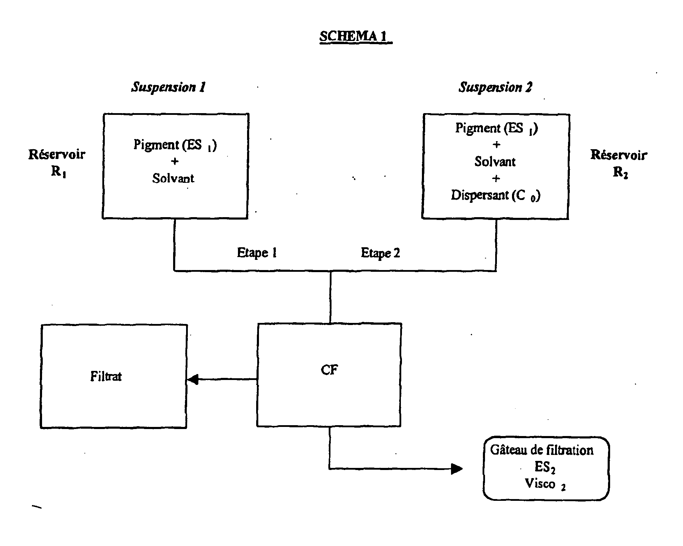

## Revendications

1. Procédé de préparation de suspensions aqueuses de matières minérales fluides, pompables et transportables par l'utilisateur final immédiatement après l'étape de filtration, éventuellement suivie d'une compression, avec de faibles quantités de dispersant mis en oeuvre et permettant le contrôle des quantités de dispersant présent dans le filtrat **caractérisé en ce qu'**il comporte une filtration en deux étapes distinctes opérées en continu l'une par rapport à l'autre, ladite première étape, où il se forme une pré-couche, ne mettant en oeuvre aucun agent dispersant, et ladite seconde étape de filtration mettant en oeuvre un ou plusieurs dispersant(s), au cours de laquelle l'eau de la pré-couche est remplacée par l'eau de la deuxième étape de filtration contenant un ou plusieurs agents dispersants et **en ce que** la quantité d'agent(s) dispersant(s) présent dans le filtrat est contrôlée et limitée par une mesure en continu de la conductivité électrique du filtrat et **en ce que** l'étape de filtration est stoppée dès l'instant où la conductivité du filtrat augmente, éventuelle suivie d'une compression.

2. Procédé de préparation de suspensions aqueuses de matières minérales selon la revendication 1, **caractérisé en ce que** la quantité d'agent dispersant utilisé dans la deuxième étape est comprise entre 0,01 % et 10 %, préférentiellement entre dans la deuxième étape est comprise entre 0,01 % et 10 %, préférentiellement entre 0,1 % et 2 % en poids sec de dispersant par rapport au poids sec de matière minérale à filtrer.

3. Procédé de préparation de suspensions aqueuses de matières minérales selon la revendications 1 ou 2, **caractérisé en ce que** la matière minérale est choisie parmi le carbonate de calcium naturel telles que les différentes craies, calcites, marbres ou encore choisie parmi les carbonates de calcium synthétiques tels que les carbonates de calcium précipités à différents stades de cristallisation ou bien encore parmi les carbonates mixtes de magnésium et de calcium tels que les dolomies ou encore parmi le carbonate de magnésium, le carbonate de zinc, la chaux, la magnésie, le sulfate de baryum tel que la baryte, le sulfate de calcium, la silice, les silico-magnésiens tels que le talc, la wollastonite, les argiles et les silico-alumineux tels que les kaolins, le mica, les oxydes ou hydroxydes de métaux ou d'alcalino-terreux tels que l'hydroxyde de magnésium, les oxydes de fer, l'oxyde de zinc, l'oxyde de titane, les dioxydes de titane sous ses formes anatase ou rutile, et leurs mélanges, et préférentiellement choisie parmi le carbonate de calcium naturel, le carbonate de calcium synthétique encore appelé carbonate de calcium précipité, le dioxyde de titane sous ses formes anatase ou rutile, le kaolin, l'hydroxyde d'aluminium, les argiles ou leurs mélanges.

## Claims

1. A process for the preparation of aqueous suspensions of fluid mineral matter, able to be pumped and conveyed by the end user immediately after the filtration stage, possibly followed by a compression stage, with small quantities of dispersing agent used, allowing the control of the quantities of dispersing agent present in the filtrate, **characterized in that** it comprises filtration in two separate stages, operated continuously relative to one another, a first stage in which a pre-layer is formed not using any dispersing agent, and a second filtration stage in the presence of one or more dispersing agents, during which the water of the pre-layer is replaced by the water of the second filtration stage, containing one or more dispersing agents, and **in that** the quantity of the dispersing agent(s) present in the filtrate is controlled and limited by a continuous measurement of the electrical conductivity of the filtrate , and **in that** the filtration stage is stopped as soon as the electrical conductivity of the filtrate increases, possibly followed by a compression stage.

2. A process for the preparation of aqueous suspensions of mineral matter according to claim 1, **characterized in that** the quantity of the dispersing agent used in the second stage is between 0.01% and 10%, preferentially between 0.1% and 2%, by dry weight of dispersing agent relative to the dry weight of mineral matter to be filtered.

3. A process for the preparation of aqueous suspensions of mineral matter according to one of claims 1 or 2, **characterized in that** the mineral matter is chosen from among natural calcium carbonate, such as the various chalks, calcites, marbles, or again is chosen from among the synthetic calcium carbonates such as the precipitated calcium carbonates at different stages of crystallization, or again from among the mixed carbonates of magnesium and calcium such as the dolomites, or again from among magnesium carbonate, zinc carbonate, lime, magnesia, barium sulphate such as barita, calcium sulphate, silica, the magnesio-silicates such as talc, wollastonite, the clays and the alumino-silicates such as the kaolins, mica, metal or alkaline earth oxides or hydroxides such as magnesium hydroxide, the iron oxides, zinc oxide, titanium oxide, titanium dioxide in its anatase or rutile forms, and their blends and preferentially chosen from among natural calcium carbonate, synthetic calcium carbonate also called precipitated calcium carbonate, titanium dioxide in its anatase or rutile forms, kaolin, aluminium hydroxide, the clays or their blends.

**Patentansprüche**

1. Verfahren zur Herstellung von wässrigen Suspensionen von flüssigen Mineralstoffen, die vom Endverbraucher sofort nach der Filterung und gegebenenfalls einer Verdichtung abgepumpt und transportiert werden können, mit Einsatz von geringen Mengen an Dispersionsmittel und der Möglichkeit der Mengenkontrolle an Dispersionsmittel im Filtrat, **gekennzeichnet durch** eine Filterung in zwei getrennten Schritten, die jeweils fortlaufend durchgeführt werden, aus einem ersten Schritt, in dem sich eine Vorschicht ohne Einsatz von Dispergiermittel bildet, und einem zweiten Filtrierschritt, bei dem wenigstens ein Dispersionsmittel eingesetzt wird, und in dem das Wasser der Vorschicht **durch** das Wasser des zweiten Filtrierschritts, welches wenigstens ein Dispersionsmittel enthält, ersetzt wird, und **gekennzeichnet dadurch, dass** die im Filtrat enthaltene Menge an Dispersionsmittel durch eine kontinuierliche Messung der elektrischen Leitfähigkeit des Filtrats gesteuert und begrenzt wird, und dass der Filtrierschritt sofort zu dem Zeitpunkt, an dem die elektrische Leitfähigkeit der Filtrats ansteigt, angehalten wird.

2. Verfahren zur Herstellung von wässrigen Suspensionen von Mineralstoffen nach Anspruch 1, **dadurch gekennzeichnet, dass** die im zweiten Filtrierschritt verwendete Menge an Dispersionsmittel zwischen 0,01% und 10%, am besten zwischen 0,1% und 2% Trockengewicht an Dispersionsmittel im Verhältnis zum Trockengewicht des zu filternden Mineralstoffs beträgt.

3. Verfahren zur Herstellung von wässrigen Suspensionen von Mineralstoffen nach einem der Ansprüche 1 oder 2, **dadurch gekennzeichnet, dass** der Mineralstoff aus natürlichen Calciumcarbonaten, wie z.B. verschiedenen Kreidearten, Kalkspat, Marmoren oder aus synthetischen Calciumcarbonaten wie gefällte Calciumcarbonate in verschiedene Stadien der Kristallisierung oder aus mit Magnesium gemischten Carbonaten wie z.B. Dolomit oder aus Magnesiumcarbonat, Zinkcarbonat, Kalk, Magnesia, Bariumsulfat wie z.B. Baryt, Calciumsulfat, Siliziumdioxid, aus Magnesio-Silikaten wie z.B Talk, Wollastonit, aus Tonarten und Alumino-Silikaten wie z.B. Kaolinen, Glimmer, Metalloxiden oder -hydroxiden oder aus Erdalkali wie z.B. Magnesiumhydroxid, Eisenoxiden, Zinkoxid, Titanoxid, Titandioxiden in Anatas-oder Rutilform oder deren Mischungen, und bevorzugt aus natürlichem Calciumcarbonat, synthetischem Calciumcarbonat, auch gefälltes Calciumcarbonat genannt, Titandioxid in Anatas- oder Rutilform, Kaolin, Aluminiumhydroxid, aus Tonarten oder deren Mischungen besteht.

SCHEMA 1

*Suspension 1*

*Suspension 2*

Réservoir
R₁

Pigment (ES ₁)
+
Solvant

Pigment (ES ₁)
+
Solvant
+
Dispersant (C ₀)

Réservoir
R₂

Etape 1            Etape 2

Filtrat

CF

Gâteau de filtration
ES₂
Visco ₂

**EP 1 539 337 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0039029 A
- JP 53025646 A
- GB 1482258 A
- GB 1463974 A
- WO 9738940 A
- US 4166582 A

**Littérature non-brevet citée dans la description**

- **Kubelka ; Munk.** *Zeitschrift für Technische Physik,* 1931, vol. 12, 539
- **Kubelka.** *J. Optical Soc. Am.,* 1948, vol. 38 (5), 448
- *J. Optical Soc. Am.,* 1954, vol. 44 (4), 330